# EUROPEAN PATENT SPECIFICATION

(11) **EP 2 635 646 B1**
(45) Date of publication and mention of the grant of the patent: **29.07.2015**
(21) Application number: 11776456.3
(22) Date of filing: 02.11.2011
(51) Int. Cl.: C09D 167/00, C09D 5/03

(54) **MATTE TEXTURED POWDER MONOCOAT COATING COMPOSITIONS**
MATTE STRUKTURIERTE PULVERBESCHICHTUNGSZUSAMMENSETZUNGEN FÜR EINFACHE BESCHICHTUNG
COMPOSITIONS DE REVÊTEMENT MONOCOUCHE PULVÉRULENTES, TEXTURÉES, MATTES

(30) Priority: 02.11.2010 US 409347 P; 17.12.2010 EP 10195682
(43) Date of publication of application: 11.09.2013
(73) Proprietor: Akzo Nobel Coatings International B.V., 6824 BM Arnhem (NL)
(72) Inventor: SOBEK, Susan, Marie, Brunswick OH 44212 (US); MILLER, Susan, Margaret, North Royalton OH 44133 (US)
(74) Representative: Akzo Nobel IP Department
(86) International application number: PCT/EP2011/069196
(87) International publication number: WO 2012/059491

(56) References cited:
- EP-A1- 1 911 820
- EP-A1- 2 236 541
- EP-A2- 1 176 175
- WO-A1-2008/135287
- WO-A1-2009/115079
- DE-A1-102007 034 865
- DE-A1-102007 047 586
- US-A- 5 856 378
- US-A1- 2006 111 492

## Description

### BACKGROUND OF THE INVENTION

### Field of the Invention

The present invention includes matte textured polyester powder monocoat coating compositions that can be used to coat substrates, such as automobile bodies, and methods of coating such substrates.

### SUMMARY OF THE INVENTION

The present invention includes matte textured polyester powder monocoat coating compositions that can be used to coat substrates, such as automobile bodies, and methods of coating such substrates with the matt textured polyester powder monocoat coating compositions.

One of the differences between automobile body coatings and exterior trim coatings is durability. For many OEM body coating specifications, the expectation is that the coating will maintain appearance and functional film integrity for 5+ years in Florida exposure. For high quality exterior trim coatings, the requirements are not as stringent for duration of exposure and functional film integrity after exposure. For example, some OEM body coating requirements call for gloss retention of at least about 90% after 1 year of Florida exposure, at least about 80% after 3 years of Florida exposure, and at least about 65% after 5 years of Florida exposure. For exterior trim coatings, the related durability requirements are at least about 80% gloss retention after 1 year of Florida exposure, at least about 50% after 3 years of Florida exposure, and no requirement after 5 years of Florida exposure.

In one embodiment of the invention, a powder coating composition comprises a polyester resin, a UV light stabilizer, a matting agent, and a texturing additive, wherein the polyester resin includes a carboxyl functional resin, a hydroxyl functional resin, or a combination thereof and wherein_the cured powder coating composition transmits less than about 0.1% of UV light at 290 nm and less than about 0.5% of UV light at 400 nm. The invention also includes methods of coating a substrate comprising applying a powder coating composition to the substrate and curing the powder coating composition.

### DESCRIPTION OF THE PRIOR ART

EP 2236541 relates to a method for preparing macromolecule(s), to macromolecule(s) obtainable by such method, to composition(s) comprising such a macromolecule(s), and to the use of such macromolecule(s). The macromolecules are hyperbranched polyester amide macromolecules. These macromolecules are used in liquid compositions.

WO 2009/115079 relates to a method for the production of a highly abrasion-resistant vehicle paint, vehicle paint and the use thereof. This method includes the steps of a) providing at least one organic monomer, oligomer, prepolymer, or organosilane having one or more organic functional groups, or mixtures thereof and b) saturating the functional groups described in a) by reacting them with silanes, such that the resultant product is a silane having at least six SiOR groups and a molecular weight exceeding 300.

DE 102007047586 relates to coating material compositions consisting of at least one binder, a formaldehyde-free and carbonyl-hydrogenated ketone-aldehyde resin.

DE 102007034865 relates to coating material compositions for, for example, metallic, mineral substrates or for substrates of wood, paper and plastics, which comprise yellowing-resistant, low-viscosity, unsaturated, amorphous polyesters which are very largely free of benzene and formaldehyde.

WO 2008/135287 relates to flame retarded thermoset formulations.

EP 1911820 relates to water-based weatherable coating compositions that provide low noise and good weathering and abrasion resistance.

US 5856378 relates to powder coatings having certain appearance of performance attributes which include composite particles that are agglomerates of individual particulate components fused or bonded together.

US 2006/111492 relates to the use of polar-modified polyolefin waxes to improve the adhesion of sealants to powder coatings.

EP 1176175 relates to powdered thermosetting compositions comprising a glycidyl group containing acrylic copolymer, and particularly, to powdered thermosetting compositions which produce a uniform matte texture after application and cure onto the surface of a substrate

### DETAILED DESCRIPTION OF THE INVENTION

The present invention includes matte textured polyester powder monocoat coating compositions that can be used to coat substrates and methods of coating such substrates with the matte textured polyester powder monocoat coating compositions. The coated and cured powder coating compositions are matte, have a fine texture and satisfy automotive industry standards for UV transmission, chemical resistance and durability. In some embodiments, an electrocoat is applied to the substrate, and the powder coating compositions of the invention is applied over the electrocoat. Thus, the present invention also includes substrates coated with a dual-coat coating composition, the dual-coat coating composition having an electrocoat coated between the substrate and a powder coating composition of the present invention.

A powder coating composition of the present invention may comprise a polyester resin, a UV light stabilizer, a matting agent, and a texturing additive. Suitable polyester resins include, without limitation, a carboxyl functional polyester resin, a hydroxyl functional polyester resin, or a combination thereof.

In some embodiments, the polyester resin is present in an amount of from about 45 to about 75 wt% of the powder coating composition. For non-limiting example, the polyester resin may include a carboxyl functional polyester resin in an amount of from about 45 to about 75 wt% of the coating composition, a hydroxyl functional polyester resin in an amount of from about 45 to about 65 wt%, or a combination thereof.

In some embodiments, the powder coating composition includes one or more compounds that function as a curing agent or as a co-reacting resin. The curing agent or co-reacting resin may include, for non-limiting example, a hydroxyalkylamide, triglycidyl isocyanurate, a low epoxy equivalent weight (EEW) glycidyl methacrylate acrylic resin, such as a resin having an EEW of about 250 to about 400, a hydrogenated Bisphenol A epoxy resin, a uretedione-butanediol adduct, a polymeric aliphatic isocyanate, a multifunctional glycidyl ester, or a combination thereof. In some embodiments of the invention, the curing agent or co-reacting resin is present in an amount of from about 2 to about 35 wt% of the coating composition.

Suitable UV light stabilizers for use in the present invention include without limitation hydroxyphenyl benzotriazole, a hindered amine light stabilizer, an oxalanilide, a hydroxybenzophenone, a hydroxyphenyl-s-triazine, or a combination thereof. In some embodiments of the invention, the UV light stabilizer may be present in an amount of from about 0.1 to about 5 wt % of the powder coating composition, or from about 1 to about 3 wt% of the coating composition. The UV light stabilizer may be used to contribute to optimum weathering and UV transmission requirements.

In some embodiments of the invention, a powder coating composition having a UV light stabilizer satisfies UV transmission targets for automotive body coatings. For non-limiting example, a cured coating composition of the invention may transmit less than about 0.1% of UV light at 290 nm and less than about 0.5% of UV light at 400 nm.

The powder coating compositions of the invention can include a matting agent in some embodiments which may provide a matte appearance to the cured powder coating composition, such as when the cured coating composition exhibits a 60° gloss of less than about 10. The matting agent may include, without limitation, barium sulfate, magnesium silicate, silicon dioxide, alumino silicates, such as without limitation anhydrous sodium potassium alumino silicate, alkali alumino silicate ceramic microspheres, alumino silicate glass microspheres or flakes, polyolefin waxes in combination with the salt of an organic anion, polymeric wax additives, or a combination thereof. The matting agent may contribute to good dispersion and handling of the texturing additive and/or to contribute to restrict the flow of the coating composition. In some embodiments of the invention, the matting agent is present in an amount of from about 0.1 to about 40 wt% of the coating composition.

In some embodiments, the powder coating composition includes a texturing additive to provide a texture to the cured coating, such as when the cured coating composition exhibits a rough, rippled or sandy appearance, as opposed to a smooth or orange peel appearance. The texturing additive may include, for non-limiting example, polytetrafluoroethylene powder, PTFE/polyethylene wax mixtures, PTFE/talc mixtures, or a combination thereof. The polytetrafluoroethylene powder may be present in an amount of from about 0.05 to about 0.5 wt% of the coating composition, or from about 0.1 to about 0.2 wt% of the coating composition. In some embodiments, the polytetrafluoroethylene powder is a granular powder having a particle size of from about 5 to about 600 microns in average particle size, and alternatively from about 5 to about 25 microns in average particle size.

The powder coating compositions of the invention may be applied over an electrocoat to protect the electrocoat from UV degradation. The powder coating compositions may have a non-uniform thickness with hills and valleys, and the coated powder coating compositions can have a measured film thickness (when measuring the top of the hills) of about 35 to about 200 µm or about 50 to about 100 µm in some embodiments. In some coating compositions of the invention, the valley:hill thickness ratio is about 1:3 or from about 1:4 to about 1:2. A measured film thickness within the range of the present invention helps prevent UV light from penetrating through the valleys of the coating and reaching the underlying electrocoat. As a result, the thickness of the powder coating composition contributes to the stability of the underlying electrocoat. In addition, the UV light stabilizer that may be present in the powder coating composition also contributes to the stability of the underlying electrocoat, although the UV light stabilizer may have little or no benefit to the powder coating composition itself.

The powder coating compositions of the invention may also include additives, such as without limitation, pigments, degassing agents, antioxidants, fillers, flow aids, catalysts, or a combination thereof.

Pigments for use in powder coating compositions of the invention include, for non-limiting example, titanium dioxide, iron oxide (yellow, brown, red, black), carbon black and organic pigments. These pigments can be added in conventional amounts known to those in the art.

A degassing agent can be added to the composition to allow any volatile material present to escape from the film during baking. Benzoin is a degassing agent and when used in some embodiments can be present in amounts from about 0.05 to about 0.8 wt% of the coating composition.

Suitable antioxidants, include, without limitation, phenolic, phosphite, phosphonite and lactone-type antioxidants, such as octadecyl-3-(3,5-Di-tert-butyl-4-hydroxyphenyl)-propionate and pentaerythritol tetrakis (3-(3,5-di-tert-butyl-4-hydroxyphenyl)-propionate, as well as combinations thereof. In some embodiments, the antioxidants are present in an amount of from about 1 to about 3 wt% of the powder coating composition.

The powder coating compositions of the invention may include one or more catalysts to accelerate the cure or otherwise catalyze the system to enhance the properties of the coating composition. Suitable catalysts include without limitation accelerated phenolic resins, alkyl ammonium salts, such as tetra butyl ammonium bromide, tetra butyl ammonium chloride, tetra butyl ammonium iodide and benzyltriethylammonium chloride, quaternary ammonium and phosphonium salts, phosphines, imidazoles, such as 2-methyl imidazole and 2-heptadecylimidazole, metal salts, 2,4-diamino-6 (2-methylimidazolyl-(1))-ethyl-s-triazine, tin salts, such as dibutyl tin dilaurate, ethyltriphenyl phosphonium acetate, triphenylphosphine, or a combination thereof. In some embodiments, the catalyst is present in an amount of from about 0.05 to about 1.5 wt% of the coating composition.

The powder coating compositions of the present invention are suitable for application to substrates, such as, without limitation, automotive bodies. However, it is also possible to apply the coating compositions to carbon, wood, glass, polymers, plastics and other substrates.

Application of the above described powder coating compositions can be accomplished by any known techniques, such as, without limitation, electrostatic spray or fluidized bed.

When viewing Composition A as the standard, the table above illustrates that the hydroxyphenyl benzotriazole light stabilizer in Composition C has a greater benefit on UV transmission compared to the increased amount of carbon black in Composition B.

### Example 2

Coating Compositions 1 through 16 were prepared using the technique described in Example 1. The compositions of Coating Compositions 1 through 16 is shown in the table below. In this table the components are listed in parts by weight.

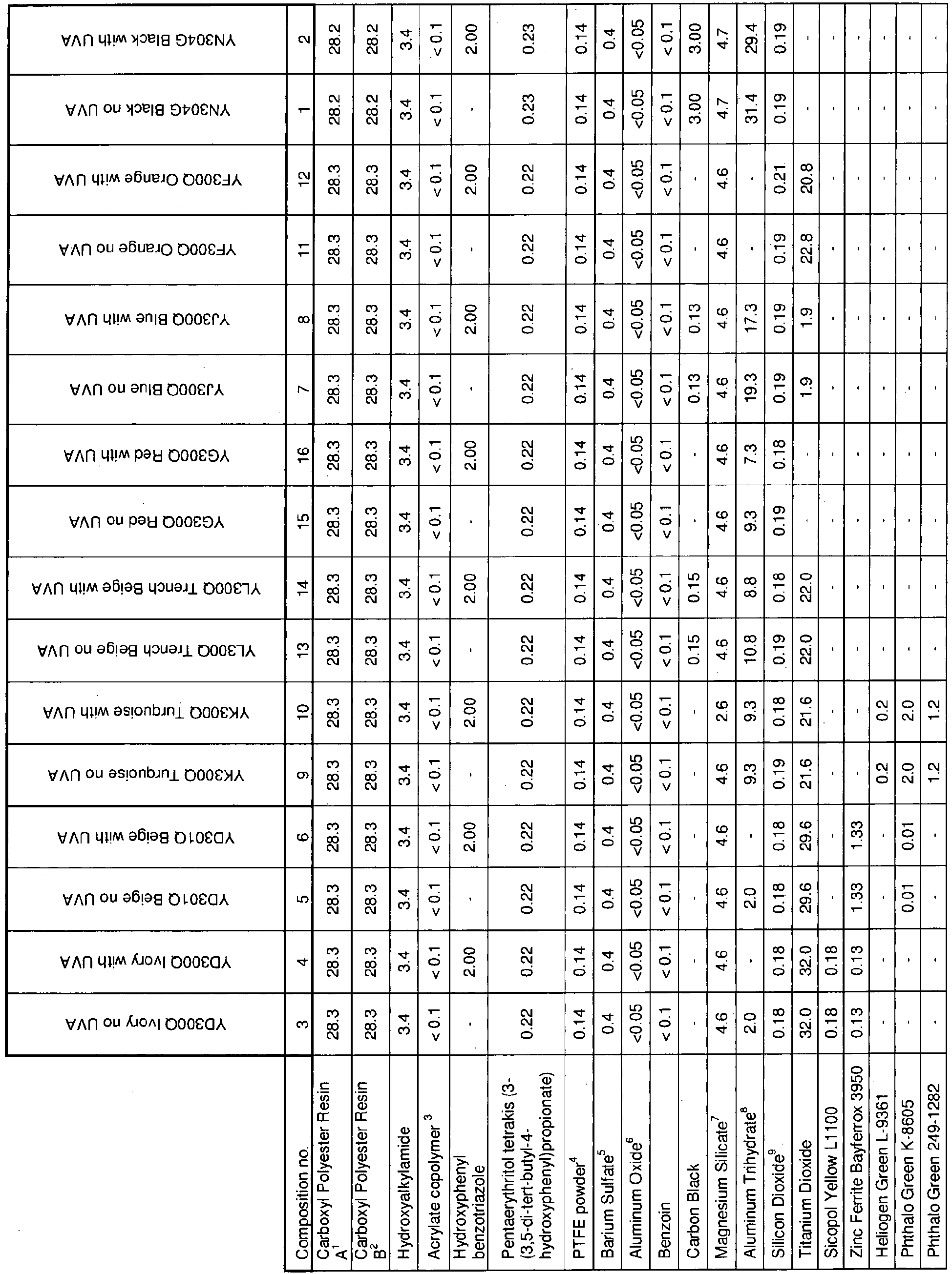

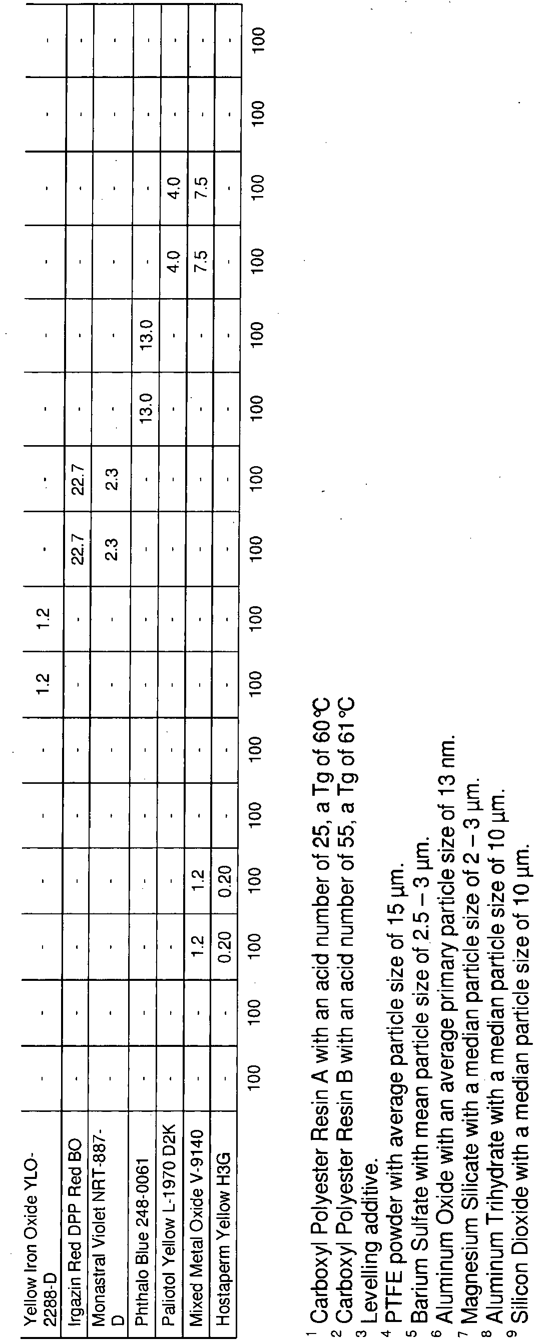

The following table and graph illustrates SAE J1961 EMMAQUA^{®} accelerated outdoor weathering testing data for Compositions 1-16 above.

| **Composition** | | **Initial Gloss** | | **After 280 MJ/ m² EMMAQUA (1 year Florida UV equivalent)** | | | | |
|---|---|---|---|---|---|---|---|---|
| | **Master Product Code/ID** | **20°** | **60°** | **20°** | **60°** | **ΔEColor** | **ΔChroma** | **ΔHue** |
| 3 | YD300Q Ivory no UVA | 1 | 3 | 1 | 3 | 0.60 | -0.58 | -0.14 |
| 4 | YD300Q Ivory with UVA | 1 | 4 | 1 | 4 | 0.56 | -0.54 | -0.10 |
| 5 | YD301Q Beige no UVA | 1 | 2 | 1 | 2 | 1.46 | -1.28 | -0.70 |
| 6 | YD301Q Beige with UVA | 1 | 3 | 1 | 3 | 1.43 | -1.25 | -0.70 |
| 7 | YJ300Q Blue no UVA | 0 | 1 | 0 | 1 | 0.45 | 0.34 | 0.26 |
| 8 | YJ300Q Blue with UVA | 0 | 1 | 0 | 1 | 0.61 | 0.42 | 0.44 |
| 9 | YK300Q Turquoise no UVA | 0 | 2 | 0 | 2 | 0.59 | -0.53 | 0.21 |
| 10 | YK300Q Turquoise with UVA | 1 | 3 | 1 | 3 | 0.33 | -0.18 | 0.10 |
| 11 | YF300Q Orange no UVA | 1 | 3 | 1 | 3 | 5.99 | -5.94 | -0.77 |
| 12 | YF300Q Orange with UVA | 1 | 4 | 1 | 4 | 5.03 | -4.99 | -0.70 |
| 13 | YL300Q Beige Trench no UVA | 1 | 4 | 1 | 4 | 0.30 | -0.10 | 0.04 |
| 14 | YL300Q Beige Trench with UVA | 1 | 4 | 1 | 4 | 0.29 | -0.05 | 0.02 |
| 15 | YG300Q Red no UVA | 0 | 1 | 0 | 1 | 2.18 | 1.22 | -1.34 |
| 16 | YG300Q Red with UVA | 0 | 1 | 0 | 1 | 1.83 | 1.02 | -1.10 |
| 1 | YN304G Black no UVA | 0 | 2 | 0 | 2 | 0.08 | -0.06 | 0.00 |
| 2 | YN304G Back with UVA | 0 | 2 | 0 | 2 | 0.06 | -0.05 | 0.03 |

| **Composition** | | **After 560 MJ/m² EMMAQUA (2 years Florida UV equivalent)** | | |
|---|---|---|---|---|
| | **Master Product Code/ ID** | **ΔEColor** | **ΔChroma** | **ΔHue** |
| 3 | YD300Q Ivory no UVA | 0.59 | -0.58 | -0.08 |
| 4 | YD300Q Ivory with UVA | 0.63 | -0.62 | -0.02 |
| 5 | YD301Q Beige no UVA | 1.90 | -1.64 | -0.97 |
| 6 | YD301Q Beige with UVA | 1.88 | -1.61 | -0.98 |
| 7 | YJ300Q Blue no UVA | 0.80 | 0.46 | 0.64 |
| 8 | YJ300Q Blue with UVA | 1.49 | 0.76 | 1.26 |
| 9 | YK300Q Turquoise no UVA | 1.02 | -1.00 | 0.17 |
| 10 | YK300Q Turquoise with UVA | 0.67 | -0.65 | -0.04 |
| 11 | YF300Q Orange no UVA | 12.14 | -11.94 | -2.01 |
| 12 | YF300Q Orange with UVA | 10.01 | -9.86 | -1.71 |
| 13 | YL300Q Beige Trench no UVA | 0.14 | -0.06 | 0.02 |
| 14 | YL300Q Beige Trench with UVA | 0.15 | 0.01 | 0.03 |
| 15 | YG300Q Red no UVA | 4.11 | 1.69 | -2.89 |
| 16 | YG300Q Red with UVA | 4.37 | 2.02 | -2.90 |
| 1 | YN304G Back no UVA | 0.3 | -0.28 | 0.07 |
| 2 | YN304G Back with UVA | 0.35 | -0.31 | 0.09 |

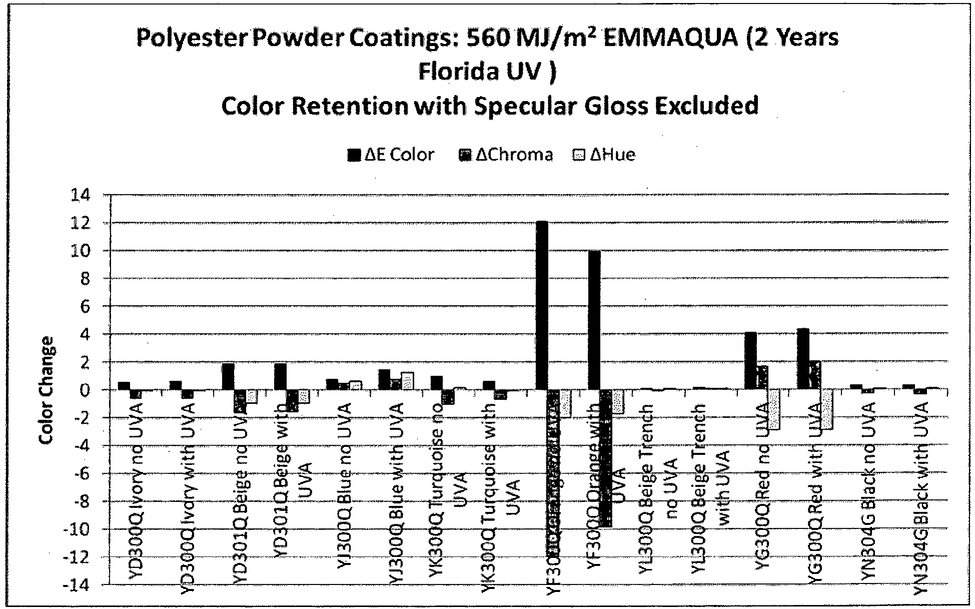

As shown in Example 2, the presence of a UV light stabilizer has little effect on the color retention of the powder coating composition. However, as noted above, the UV light stabilizer may contribute to the stability of the underlying electrocoat.

## Claims

1. A dual-coat powder coating composition comprising:
an electrocoat; and
a matte textured powder coating composition comprising:
a) a polyester resin;
b) a UV light stabilizer;
c) a matting agent; and
d) a texturing additive,
wherein the polyester resin includes a carboxyl functional resin, a hydroxyl functional resin, or a combination thereof and wherein the cured powder coating composition transmits less than about 0.1 % of UV light at 290 nm and less than about 0.5% of UV light at 400 nm.

2. The dual-coat powder coating composition of claim 1, wherein the polyester resin comprises a carboxyl functional polyester resin, a hydroxyl functional polyester resin, or a combination thereof.

3. The dual-coat powder coating composition of claim 1, further comprising a curing agent or a co-reacting resin, wherein the curing agent or co-reacting resin comprises a hydroxyalkylamide, a triglycidyl isocyanurate, a glycidyl methacrylate acrylic resin, a hydrogenated Bisphenol A epoxy resin, a uretedione-butanediol adduct, a polymeric aliphatic isocyanate, a multifunctional glycidyl ester, or a combination thereof.

4. The dual-coat powder coating composition of claim 1, wherein the UV light stabilizer comprises hydroxyphenyl benzotriazole, a hindered amine light stabilizer, an oxalanilide, a hydroxybenzophenone, a hydroxyphenyl-s-triazine, or a combination thereof.

5. The dual-coat powder coating composition of claim 1, wherein the matting agent comprises barium sulfate, magnesium silicate, silicon dioxide, alumino silicates, alkali alumino silicate ceramic microspheres, alumino silicate glass microspheres or flakes, polyolefin waxes in combination with the salt of an organic anion, polymeric wax additives, or a combination thereof.

6. The dual-coat powder coating composition of claim 1, wherein the texturing additive comprises polytetrafluoroethylene powder, PTFE/polyethylene wax mixtures, PTFE/taic mixtures, or a combination thereof.

7. The dual-coat powder composition of claim 1, further comprising a pigment, a degassing agent, an antioxidant, a filler, a flow ald, a catalyst, or a combination thereof.

8. A method of coating a substrate comprising applying the dual-coat powder coating composition of claim 1 to the substrate and curing the dual-coat powder coating composition.

9. The method of claim 8, wherein the substrate is an automobile body.

10. The method of claim 8, wherein the electrocoat is coated between the substrate and the a matte textured powder coating composition.

11. An automobile body coated with the dual-coat powder coating composition of claim 1.

12. The automobile body of claim 11, wherein the electrocoat is coated between the automobile body and the matte textured powder coating composition.

13. A substrate coated with a dual-coat coating composition, the dual-coat coating composition comprising an electrocoat coated between the substrate and the matte textured powder coating composition of claim 1.

14. The dual-coat powder coating composition of claim 1, wherein the cured matte textured powder coating composition exhibits a 60° gloss of less than 10.

15. The dual-coat powder coating composition of claim 1 wherein the valley:hill thickness ratio is from 1:4 to 1:2.

16. The substrate of claim 13 wherein the coated matte textured powder coating composition has a measured film thickness of 35 to 200 um.

## Patentansprüche

1. Pulverbeschichtungszusammensetzung für doppelte Beschichtung aufweisend:
eine Elektrobeschichtung; und
eine matte strukturierte Pulverbeschichtungszusammensetzung aufweisend:
a) ein Polyesterharz;
b) einen UV-Lichtstabilisator;
c) ein Mattierungsmittel; und
d) einen Texturierungs-Zusatzstoff,
wobei das Polyesterharz ein carboxylfunktionelles Harz, ein hydroxylfunktionelles Harz oder eine Kombination daraus aufweist, und wobei die ausgehärtete Pulverbeschichtungszusammensetzung weniger als etwa 0,1 % UV-Licht bei 290 nm und weniger als etwa 0,5% UV-Licht bei 400 nm durchlässt.

2. Pulverbeschichtungszusammensetzung für doppelte Beschichtung nach Anspruch 1, wobei das Polyesterharz ein carboxylfunktionelles Polyesterharz, ein hydroxylfunktionelles Polyesterharz oder eine Kombination daraus aufweist.

3. Pulverbeschichtungszusammensetzung für doppelte Beschichtung nach Anspruch 1, weiterhin aufweisend einen Härter oder ein mitreagierendes Harz, wobei der Härter oder das mitreagierende Harz ein Hydroxyalkylamid, ein Triglycidylisocyanurat, ein Glycidylmethacrylat-Acrylharz, ein hydriertes Bisphenol A Epoxidharz, ein Uretdion-Butandiol-Addukt, ein polymeres, aliphatisches Isocyanat, einen multifunktionellen Glycidylester oder eine Kombination daraus aufweist.

4. Pulverbeschichtungszusammensetzung für doppelte Beschichtung nach Anspruch 1, wobei der UV-Lichtstabilisator Hydroxyphenylbenzotriazol, einen gehemmten Amin-Lichtstabilisator, ein Oxalanilid, ein Hydroxybenzophenon, ein Hydroxyphenyl-s-triazin oder eine Kombination daraus aufweist.

5. Pulverbeschichtungszusammensetzung für doppelte Beschichtung nach Anspruch 1, wobei das Mattierungsmittel Bariumsulfat, Magnesiumsilikat, Siliziumdioxid, Aluminosilikate, Alkali-Aluminosilikat-keramische Mikrosphären, Aluminosilikat-Glasmikrosphären oder -flocken, Polyolefin-Wachse in Kombination mit dem Salz eines organischen Anions, polymerische Wachsadditive oder eine Kombination daraus aufweist.

6. Pulverbeschichtungszusammensetzung für doppelte Beschichtung nach Anspruch 1, wobei der Texturierungs-Zusatzstoff Polytetrafluorethylenpulver, PTFE/Polyethylen-Wachsmischungen, PTFE/Talkmischungen oder eine Kombination daraus aufweist.

7. Pulverzusammensetzung für doppelte Beschichtung nach Anspruch 1, weiterhin aufweisend ein Pigment, ein Entgasungsmittel, ein Antioxidans, einen Füllstoff, ein Fließhilfsmittel, einen Katalysator oder eine Kombination daraus.

8. Verfahren zum Beschichten eines Substrats aufweisend das Auftragen der Pulverbeschichtungszusammensetzung für doppelte Beschichtung nach Anspruch 1 auf das Substrat und das Aushärten der Pulverbeschichtungszusammensetzung für doppelte Beschichtung.

9. Verfahren nach Anspruch 8, wobei das Substrat eine Fahrzeugkarosserie ist.

10. Verfahren nach Anspruch 8, wobei die Elektrobeschichtung zwischen dem Substrat und der matten strukturierten Pulverbeschichtungszusammensetzung überzogen ist.

11. Fahrzeugkarosserie, beschichtet mit der Pulverbeschichtungszusammensetzung für doppelte Beschichtung nach Anspruch 1.

12. Fahrzeugkarosserie nach Anspruch 11, wobei die Elektrobeschichtung zwischen der Fahrzeugkarosserie und der matten strukturierten Pulverbeschichtungszusammensetzung überzogen ist.

13. Substrat, beschichtet mit einer Beschichtungszusammensetzung für doppelte Beschichtung, wobei die Beschichtungszusammensetzung für doppelte Beschichtung eine Elektrobeschichtung aufweist, die zwischen dem Substrat und der matten strukturierten Pulverbeschichtungszusammensetzung nach Anspruch 1 überzogen ist.

14. Pulverbeschichtungszusammensetzung für doppelte Beschichtung nach Anspruch 1, wobei die ausgehärtete matte strukturierte Pulverbeschichtungszusammensetzung einen 60° Glanz von weniger als 10 aufweist.

15. Pulverbeschichtungszusammensetzung für doppelte Beschichtung nach Anspruch 1, wobei das Tal-Berg-Dickenverhältnis von 1:4 bis 1:2 beträgt.

16. Substrat nach Anspruch 13, wobei die überzogene matte strukturierte Pulverbeschichtungszusammensetzung eine gemessene Schichtdicke von 35 bis 200 um hat.

## Revendications

1. Composition de revêtement à double couche pulvérulente comprenant:
un électrorêvetement ; et
une composition de revêtement pulvérulente texturée matte comprenant :
a) une résine de polyester ;
b) un stabilisant anti-UV ;
c) un agent de matage ; et
d) un additif de texturation,
dans laquelle la résine polyester comporte une résine à fonction carboxyle, une résine à fonction hydroxyle, ou une combinaison de celles-ci et dans laquelle la composition de revêtement pulvérulente durcie transmet moins d'environ 0,1% de lumière UV à 290 nm et moins d'environ 0,5% de lumière UV à 400 nm.

2. Composition de revêtement à double couche pulvérulente de la revendication 1, dans laquelle la résine de polyester comprend une résine de polyester à fonction carboxyle, une résine de polyester à fonction hydroxyle, ou une combinaison de celles-ci.

3. Composition de revêtement à double couche pulvérulente de la revendication 1, comprenant en outre un agent de durcissement ou une résine co-réactive, dans laquelle l'agent de durcissement ou la résine co-réactive comprend un hydroxyalkylamide, un isocyanurate de triglycidyle, une résine acrylique de méthacrylate de glycidyle, une résine époxy de Bisphénol A hydrogénée, un adduit uretedione-butanediol, un polymère d'isocyanate aliphatique, un ester de glycidyle multifonctionnel, ou une combinaison de ceux-ci.

4. Composition de revêtement à double couche pulvérulente de la revendication 1, dans laquelle le stabilisant anti-UV comprend de l'hydroxyphényl benzotriazole, un photostabilisant de type amine encombrée, un oxalanilide, une hydroxybenzophénone, une hydroxyphényl-s-triazine, ou une combinaison de ceux-ci.

5. Composition de revêtement à double couche pulvérulente de la revendication 1, dans laquelle l'agent de matage comprend du sulfate de baryum, du silicate de magnésium, du dioxyde de silicium, des aluminosilicates, des microsphères de céramique d'aluminosilicate alcalin, des flocons ou des microsphères de verre d'aluminosilicate, des cires de polyoléfine en combinaison avec le sel d'un anion organique, des additifs de cire polymère, ou une combinaison de ceux-ci.

6. Composition de revêtement à double couche pulvérulente de la revendication 1, dans laquelle l'additif de texturation comprend une poudre de polytétrafluoroéthylène, des mélanges de cire à base de PTFE/polyéthylène, des mélanges PTFE/talc, ou une combinaison de ceux-ci.

7. Composition de revêtement à double couche pulvérulente de la revendication 1, comprenant en outre un pigment, un agent de dégazage, un antioxydant, une charge, un adjuvant de fluidisation, un catalyseur, ou une combinaison de ceux-ci.

8. Procédé de revêtement d'un substrat comprenant l'application de la composition de revêtement à double couche pulvérulente de la revendication 1 sur le substrat et le durcissement de la composition de revêtement à double couche pulvérulente.

9. Procédé de la revendication 8, dans lequel le substrat est une carrosserie d'automobile.

10. Procédé de la revendication 8, dans lequel l'électrorevêtement est revêtu entre le substrat et la composition de revêtement pulvérulente texturée matte.

11. Carrosserie d'automobile revêtue de la composition de revêtement à double couche pulvérulente de la revendication 1.

12. Carrosserie d'automobile de la revendication 11, dans laquelle l'électrorevêtement est revêtu entre la carrosserie d'automobile et la composition de revêtement pulvérulente texturée matte.

13. Substrat revêtu d'une composition de revêtement à double couche, la composition de revêtement à double couche comprenant un électrorevêtement revêtu entre le substrat et la composition de revêtement pulvérulente texturée matte de la revendication 1.

14. Composition de revêtement à double couche pulvérulente de la revendication 1, dans laquelle la composition de revêtement pulvérulente texturée matte durcie présente un brillant à 60° inférieur à 10.

15. Composition de revêtement à double couche pulvérulente de la revendication 1, dans laquelle le rapport d'épaisseur creux:bosse est compris entre 1:4 et 1:2.

16. Substrat de la revendication 13 dans lequel la composition de revêtement pulvérulente texturée matte revêtue a une épaisseur de film mesurée allant de 35 à 200 µm.
